# EUROPEAN PATENT APPLICATION

(11) **EP 2 458 263 A1**
(43) Date of publication of application: **30.05.2012**
(21) Application number: 10802108.0
(22) Date of filing: 24.03.2010
(51) Int. Cl.: F21S 2/00, G02F 1/13357, F21Y 101/02

(54) **SUPPORT PIN, ILLUMINATION DEVICE, DISPLAY DEVICE, AND TELEVISION RECEIVING DEVICE**

(30) Priority: 21.07.2009 JP 2009170329
(71) Applicant: Sharp Kabushiki Kaisha, Osaka-shi, Osaka 545-8522 (JP)
(72) Inventor: SHIMIZU, Takaharu, Osaka-shi, Osaka 545-8522 (JP)
(74) Representative: Müller-Boré & Partner Patentanwälte
(86) International application number: PCT/JP2010/055058
(87) International publication number: WO 2011/010487

(57) **Abstract**

In a support pin (11) for supporting optical members (43 to 45) through which light from a LED (24) passes, the portion of a top (14), which is in contact with a diffusion plate (43), is formed of a light reflective material, and the portion of a column (12), which supports the top (14), is formed of a light transmissive material.

## Description

### Technical Field

The present invention relates to a support pin, an illumination device, a display device, and a television receiving device.

### Background Art

Typically, a liquid crystal display device (display device) including a non-light emitting type liquid crystal display panel (display panel) includes a backlight unit (illumination device) as well that supplies light to the liquid crystal display panel. The backlight unit includes various optical members used to control a travel direction of light from a built-in light source (for example, a linear light source such as a fluorescent tube or a point light source such as a light emitting element).

For example, in a backlight unit 149 of Patent Document 1 shown in Fig. 11A, two optical members 146 · 147 are disposed at an edge of a backlight chassis 141, and in the process where the optical members 146 · 147 transmit light of a fluorescent tube 124 therethrough, an emission direction of the light is controlled. That is, thanks to the presence of the optical members 146 · 147 described above, light from the backlight unit 149 is controlled so that there occurs no light amount unevenness in the light.

### List of Citations

### Patent Literature

Patent Document 1: JP-A-H07-64084 (see paragraph [0027])

### Summary of the Invention

### Technical Problem

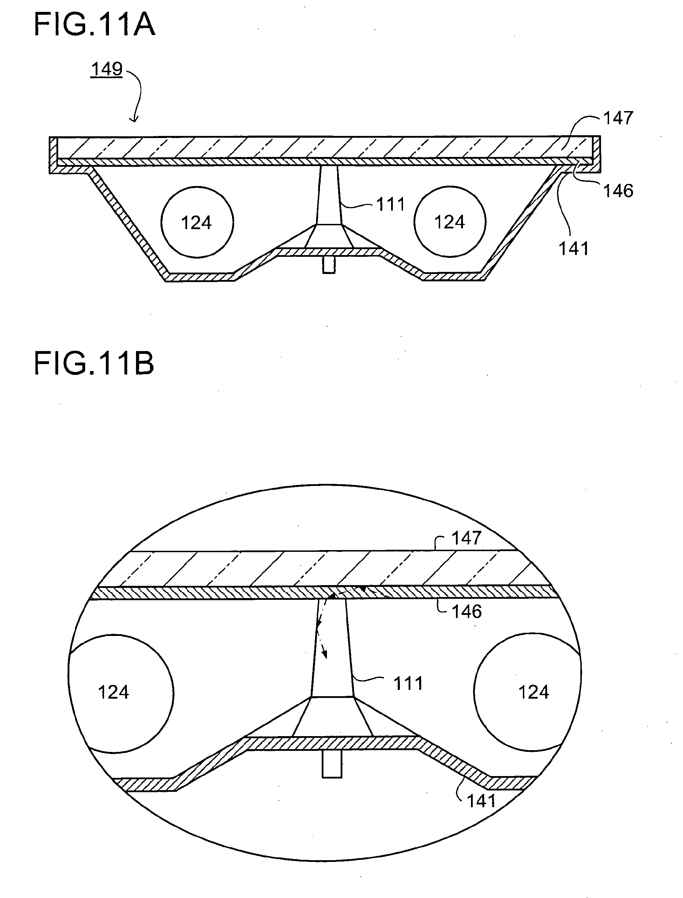

In the above-described configuration, however, as shown in Fig. 11 A, a support pin 111 for supporting the optical members 146 · 147 is mounted to the backlight unit 149. In a case where the support pin 111 is made of a transparent resin, as shown in Fig. 11B, part of light passing in various directions through the optical members 146 · 147 tends to enter the support pin 111 from a tip end thereof (see an arrow indicated by alternate long and short dashed lines).

Once light in the optical members 146 · 147 has entered the inside of the support pin 111 as described above, a portion of the optical members 146 · 147 in the vicinity of the support pin 111 becomes darker than the surroundings, resulting in the occurrence of light amount unevenness in light emitted from the backlight unit 149.

The present invention has been made to solve the above-described problem. An object of the present invention is to provide a support pin that suppresses the occurrence of light amount unevenness in light emitted from an illumination device such as a backlight unit and thus is adapted for use in an illumination device and further to provide electronic devices such as an illumination device and so on.

### Solution to the Problem

A support pin supports an optical member that transmits light from a light source therethrough. Where a portion of the above-described support pin that comes in contact with the optical member is defined as a top portion, and a portion thereof that supports the top portion is defined as a column portion, the top portion is made of a light reflective material, and the column portion is made of a light transmissive material.

According to this configuration, when light passes in various directions through the optical member, part of the light in the optical member, which would otherwise enter the support pin, is reflected by the top portion made of a light reflective material. Thus, light in the optical member is prevented from entering the support pin, so that it is unlikely that the vicinity of the top portion of the support pin becomes darker compared with the surroundings.

Furthermore, unlike the top portion, the column portion of the support pin is made of a light transmissive material. Hence, even when the column portion is irradiated with light from the light source, a shadow is unlikely to be cast. Thus, providing an illumination device that utilizes light from a light source with the above-described support pin makes it unlikely that there occurs light amount unevenness in light from the illumination device (that is, it can be said that this support pin is a member that is used usefully in an illumination device).

Preferably, the top portion has a tapered shape (for example, a cone shape). According to this configuration, an area of the support pin where it comes in contact with the optical member is relatively small. Thus, an area of the optical member where the support pin is reflected also becomes small, so that it becomes unlikely that there occurs light amount unevenness in light emitted via the optical member, which is attributable to the support pin being reflected.

Furthermore, in a case where the area of the optical member where the support pin is reflected is desired to be even smaller, the top portion may be made of paint.

Furthermore, preferably, the column portion has a column shape (for example, a polygonal column shape) including a flat surface along a pin axis direction of the support pin. This configuration makes it possible to adjust the position of the flat surface through changing the disposition of the support pin and thus can guide reflected light from the flat surface to a desired direction. Thus, reflected light from the support pin is adjusted so that the support pin is prevented from visually standing out when seen from the outside.

By the way, the support pin may be formed to be continuous with a functional member having an intended use other than supporting the optical member. For example, the functional member may be a member for grasping the light source. Furthermore, the functional member may be a member for coupling a plurality of other members together.

The reason for this is that, when an illumination device including the support pin configured as above, the optical member that is supported by the support pin, and a light source that supplies light to the optical member is provided with such a multifunctional support pin, the number of components used can be reduced.

To be more specific, in the illumination device, the support pin is formed to be continuous with a functional member having an intended use other than supporting the optical member, and the functional member has, for example, an intended use to grasp a linear light source that is the light source. Furthermore, in another example of the illumination device, the functional member has an intended use to couple a mounting substrate to which the light source is mounted to a chassis.

Preferably, in a case where a plurality of the light sources are disposed in rows, and the support pin is interposed between adjacent ones of the light sources, a side surface of the column portion along the pin axis direction of the support pin is orthogonal to a direction in which the adjacent ones of the light sources interposing the support pin therebetween are arranged.

According to this configuration, when light from the light source becomes incident on the side surface of the column portion of the support pin, part of the light that is not transmitted through the column portion but is reflected therefrom tends to travel toward a direction in which it returns to the light source. This decreases the amount of light that is reflected to travel in various directions relative to the support pin and thus makes it unlikely that the support pin visually stands out when seen from the outside.

It can be said that a display device including the illumination device configured as above and a display panel (for example, a liquid crystal display panel) that receives light from the illumination device is also encompassed within the scope of the present invention, and that a television receiving device including the display device is also encompassed within the scope of the present invention.

### Advantageous Effects of the Invention

According to the support pin of the present invention, while supporting an optical member that receives light from a light source, when the optical member has received light from the light source, the support pin does not allow entry thereinto of the light passing in various directions through the optical member, and also prevents a shadow from being cast. Thus, providing an illumination device with the above-described support pin makes it unlikely that, in light from the illumination device, there occurs light amount unevenness attributable to entry of the light into the support pin and light amount unevenness attributable to a shadow cast due to the presence of the support pin.

### Brief Description of Drawings

[Fig. 1 is a partial cross-sectional view based on Fig. 9 (cross-sectional view taken along a line A-A' indicated by arrows in Fig. 9).
[Fig. 2] is a perspective view of a support pin.
[Fig. 3] is an optical path diagram showing one example of optical paths of light in a backlight unit.
[Fig. 4] is a plan view of a bottom surface of a backlight chassis to which LED modules are mounted.
[Fig. 5A] is an optical path diagram showing one example of optical paths of light that is transmitted through a ens.
[Fig. 5B] is an optical path diagram showing optical paths as a comparative example.
[Fig. 6] is a perspective view of the lens.
[Fig. 7] is a perspective view of the support pin.
[Fig. 8] is a cross-sectional view of the backlight unit including the support pin having a riveting function.
[Fig. 9] is an exploded perspective view of a liquid crystal display device.
[Fig. 10] is an exploded perspective view of a liquid crystal television including the liquid crystal display device.
[Fig. 11A] is a cross-sectional view of a conventional backlight unit.
[Fig. 11B] is an optical path diagram of light in the conventional backlight unit.

### Description of Embodiments

### [Embodiment 1]

The following describes one embodiment with reference to the appended drawings. In some of the drawings, hatching, reference symbols of members, and so on may be omitted for the sake of convenience, in which case reference should be made to other drawings. Hatching may be provided, however, even in a view other than a cross-sectional view for the sake of convenience.

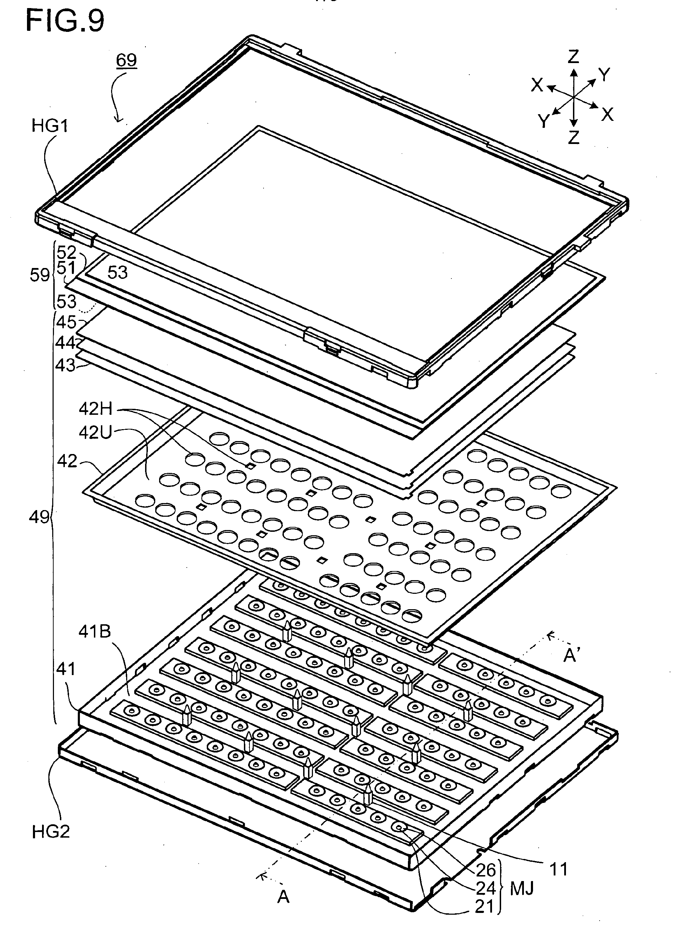

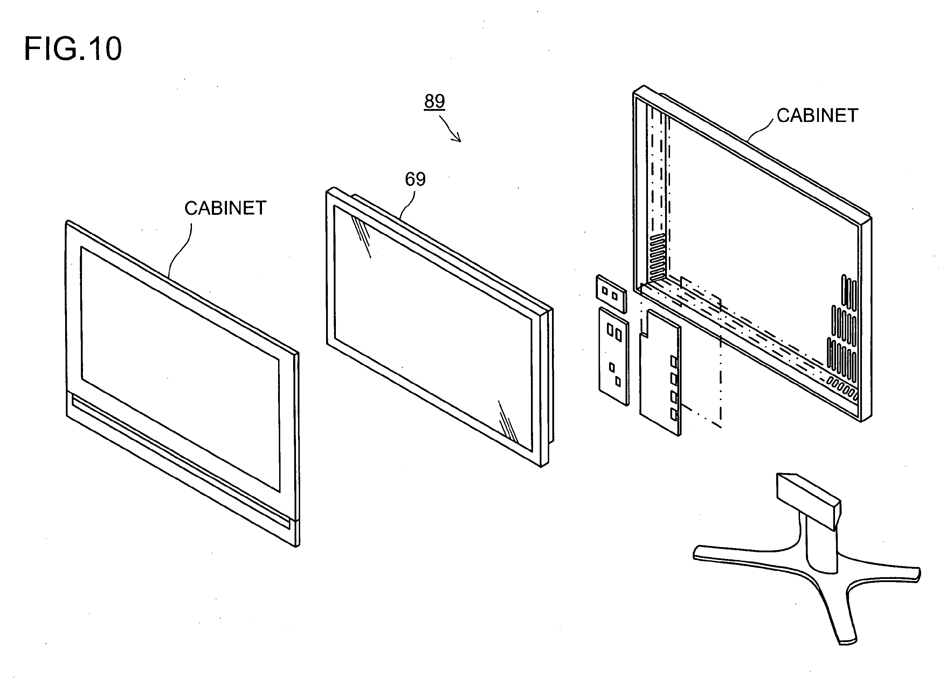

Fig. 10 shows a liquid crystal television 89 including a liquid crystal display device (display device) 69. The liquid crystal television 89 projects images upon receipt of television broadcast signals and, therefore, can be said to be a television receiving device. Fig. 9 is an exploded perspective view showing the liquid crystal display device. As shown in this figure, the liquid crystal display device 69 includes a liquid crystal display panel 59, a backlight unit (illumination device) 49 that supplies light to the liquid crystal display panel 59, and a housing HG (front housing HG1 · rear housing HG2) that sandwiches these members between the front and rear housings HG1 and HG2.

The liquid crystal display panel 59 is formed by laminating together an active matrix substrate 51 including a switching element such as a TFT (thin film transistor) or the like and an opposed substrate 52 opposed to the active matrix substrate 51 by use of a sealing material (not shown). Further, liquid crystal (not shown) is injected into a gap between both the substrates 51 · 52.

A polarization film 53 is attached to each of a light receiving surface side of the active matrix substrate 51 and an emission side of the opposed substrate 52. The liquid crystal display panel 59 configured as above displays images by utilizing variations in transmittance attributable to a tilt of liquid crystal molecules.

Next, the following describes the backlight unit 49 positioned immediately below the liquid crystal display panel 59. The backlight unit 49 includes an LED module (light emitting module) MJ, a backlight chassis 41, a support pin 11, a large-sized reflection sheet 42, a diffusion plate 43, a prism sheet 44, and a microlens sheet 45.

The LED module MJ includes a mounting substrate 21, an LED (light emitting diode) 24, and a lens 26.

The mounting substrate 21 is a plate-shaped rectangular substrate and has a mounting surface 21U on which a plurality of electrodes (not shown) are arranged. Further, the LED 24 that is a light emitting element is mounted on each of these electrodes. On the mounting surface 21U of the mounting substrate 21, a resist film (not shown) that acts as a protection film is formed. The resist film is preferably white in color so as to have reflectivity, though there is no particular limitation thereto. The reason for this is that, even when light becomes incident on the resist film, the light is reflected off the resist film and seeks to travel toward the outside, and thus the problem of light absorption by the mounting substrate 21, which leads to the occurrence of light amount unevenness, is solved.

The LED 24 is a light source and emits light based on a current fed via each of the electrodes on the mounting substrate 21. As the LED 24, many types of LEDs including the following are used. For example, as the LED 24, there is used an LED of a type including a blue light emitting LED chip (light emitting chip) and a phosphor that emits yellow florescent light upon receipt of light from the LED chip (there is no particular limitation on the number of the LED chips used). The LED 24 of this type generates white light based on light from the blue light emitting LED chip and fluorescent light.

A phosphor incorporated into the LED 24, however, is not limited to a phosphor that emits yellow florescent light. For example, as the LED 24, there may be used an LED of a type including a blue light emitting LED chip and phosphors that respectively emit green fluorescent light and red fluorescent light upon receipt of light from the LED chip so that white light is generated based on the blue light from the LED chip and the fluorescent light (green light · red light).

An LED chip incorporated into the LED 24 is also not limited to a blue light emitting LED chip. For example, as the LED 24, there may be used an LED of a type including a red LED chip that emits red light, a blue LED chip that emits blue light, and a phosphor that emits green fluorescent light upon receipt of light from the blue LED chip. The reason for this is that the LED chip 24 of this type can generate white light based on red light from the red LED chip, blue light from the blue LED chip, and green fluorescent light.

Furthermore, the LED 24 may be of a type including no phosphor. For example, as the LED 24, there may be used an LED of a type including a red LED chip that emits red light, a green LED chip that emits green light, and a blue LED chip that emits blue light so that white light is generated based on light from all the LEDs chips.

Furthermore, the backlight unit 49 shown in Fig. 9 includes, as the mounting substrate 21, a mounting substrate of such a relatively short type that five LEDs 24 are mounted in line on each sheet of the substrate and a mounting substrate of such a relatively long type that eight LEDs 24 are mounted in line on each sheet of the substrate.

In particular, these two types of mounting substrates 21 are arranged so that a row of thirteen LEDs 24 is formed as a combination of a row of five LEDs 24 and a row of eight LEDs 24, and pairs of the two types of mounting substrates 21 are arranged also in a direction intersecting (for example, orthogonal to) a direction in which the thirteen LEDs 24 are arranged. Thus, the LEDs 24 are disposed in a matrix form and emit planar light (for the sake of convenience, the direction in which the different types of mounting substrates 21 are arranged is defined as an X direction, the direction in which the same type of mounting substrates 21 are arranged is defined as a Y direction, and a direction intersecting the X direction and the Y direction is defined as a Z direction).

The thirteen LEDs 24 arranged in the X direction are electrically connected in series, and each row of thirteen LEDs 24 thus connected in series is electrically connected in parallel to another row of thirteen LEDs 24 connected in series, which is adjacent thereto along the Y direction. These LEDs 24 arranged in the matrix form are driven in parallel.

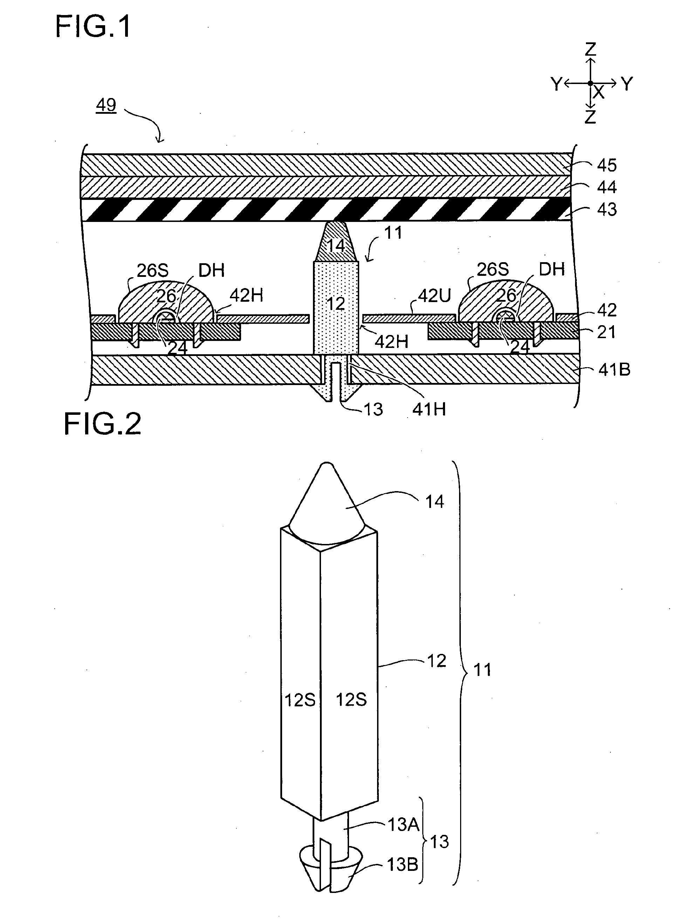

The lens 26 receives light from the LED 24 and transmits (emits) the light therethrough. To be more specific, the lens 26 has, on a side of its rear surface (light receiving surface) opposite to a lens surface 26S, a housing recess DH (see after-mentioned Fig. 1) capable of housing the LED 24 therein and lies over the LED 24 so that the housing recess DH and the LED 24 positionally coincide with each other. The LED 24 is thus embedded inside the lens 26, so that light from the LED 24 is reliably supplied to the inside of the lens 26. Most part of the light thus supplied is then emitted to the outside via the lens surface 26S.

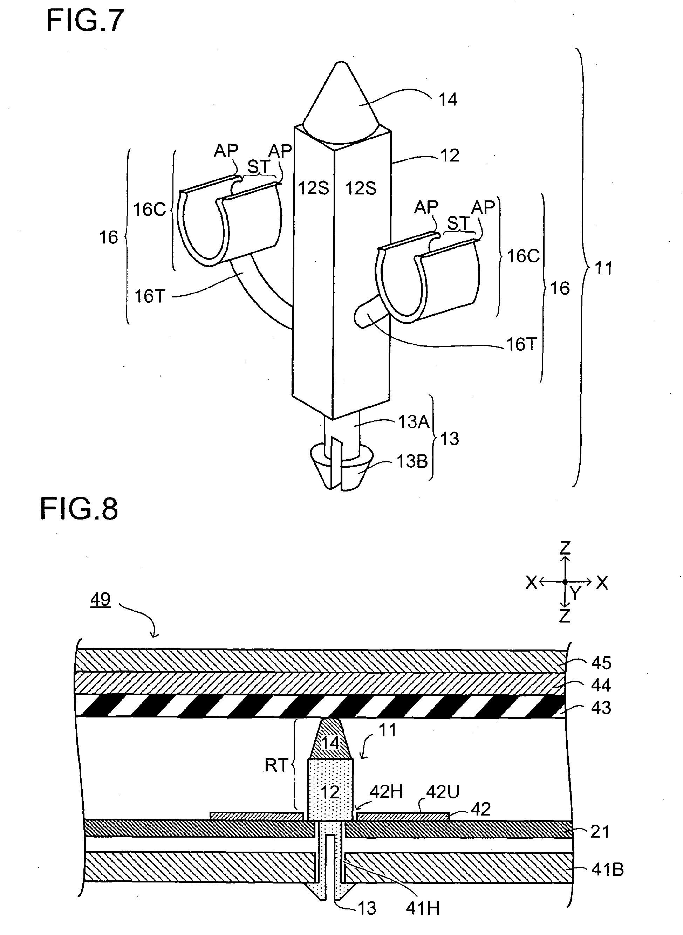

As shown in Fig. 9, the backlight chassis 41 is a member having, for example, a box shape and houses a plurality of the LED modules MJ in such a manner that the LED modules MJ are laid densely on a bottom surface 41B thereof. The bottom surface 41B of the backlight chassis 41 and the mounting substrate 21 of the LED module MJ are connected to each other via, for example, a rivet (see after-mentioned Fig. 7).

The support pin 11 is mounted to the bottom surface 41B of the backlight chassis 41 and thus is brought to a raised state from the bottom surface 41B and supports the diffusion plate 43, the prism sheet 44, and the microlens sheet 45 (the backlight chassis 41, together with the support pin 11, may support by the top of its side wall, the diffusion plate 43, the prism sheet 44, and the microlens 45, which are layered in this order). The support pin 11 is described in detail later.

The large-sized reflection sheet 42 is an optical member having a reflection surface 42U and lies over the plurality of the LED modules MJ disposed in the matrix form, with a rear surface of the reflection surface 42U facing the LED modules MJ. The large-sized reflection sheet 42, however, includes a pass-through opening 42H formed therethrough so as to positionally coincide with the lens 26 of each of the LED modules MJ, and thus the lens 26 is exposed from the reflection surface 42U (some of the openings 42H are of a type that exposes the above-described support pin 11).

In this case, even if part of light emitted from the lens 26 travels toward the side of the bottom surface 41B of the backlight chassis 41, the part of light is reflected by the reflection surface 42U of the large-sized reflection sheet 42 and travels away from the bottom surface 41B. Thus, thanks to the presence of the large-sized reflection sheet 42, light of the LED 24 is made to travel toward the diffusion plate 43 opposed to the reflection surface 42U without being lost.

The diffusion plate 43 is a plate-shaped optical member laid on the large-sized reflection sheet 42 and diffuses light emitted from the LED module MJ and reflected light from the large-sized reflection sheet 42. That is, the diffusion plate 43 diffuses planar light formed by the plurality of the LED modules MJ so that the light is spread over the entire region of the liquid crystal display panel 59.

The prism sheet 44 is a sheet-shaped optical member laid on the diffusion plate 43. The prism sheet 44 is formed by arranging, for example, triangular prisms extending in one direction (linearly) in a direction intersecting the one direction in the plane of the prism sheet 44. Configured as above, the prism sheet 44 deflects a radiation characteristic of light from the diffusion plate 43. It is favorable that the prisms extend along the Y direction in which the number of the LEDs 24 disposed is small and are arranged along the X direction in which the number of the LEDs 24 disposed is large.

The microlens sheet 45 is a sheet-shaped optical member laid on the prism sheet 44. Particulates that refract and scatter light are dispersed in the microlens sheet 45. Configured as above, the microlens sheet 45 causes no local convergence of light from the prism sheet 44 and thus suppresses the occurrence of brightness unevenness (light amount unevenness) in the light.

The backlight unit 49 configured as above passes planar light formed by the plurality of the LED modules MJ through a plurality of sheets of the optical members 43 to 45 and thus supplies the light to the liquid crystal display panel 59. Thus, by receiving light (backlight light) from the backlight unit 49, the liquid crystal display panel 59 of the non-light emitting type provides an improved display function.

Now, the following describes in detail the support pin 11 with reference to the cross-sectional view shown in Fig. 1 (cross-sectional view taken along the line A-A' indicated by the arrows in Fig. 9) and the perspective view shown in Fig. 2. As shown in Fig. 1, the support pin 11 is positioned between adjacent ones of the mounting substrates 21 and is mounted to the bottom surface 41B of the backlight chassis 41. The support pin 11 provided in a raised state from the bottom surface 41B protrudes toward the diffusion plate 43 through the opening 42H formed through the large-sized reflection sheet 42.

As shown in Fig. 2, the support pin 11 described above includes a column portion 12, an engagement portion 13, and a top portion 14.

The column portion 12 constitutes a main body of the support pin 11 and is, for example, a column (quadrangular column) having a quadrangular bottom surface. The column portion 12 is made of a transparent resin that transmits light therethrough (a resin material used here, however, is not particularly limited, and examples thereof include polycarbonate).

The engagement portion 13 is a member that is connected to a tail end of the column portion 12 and used to mount the support pin 11 itself to the bottom surface 41B of the backlight chassis 41. Specifically, the engagement portion 13 includes a protrusion piece 13A and a hook piece 13B.

The protrusion piece 13A is a column piece (a column thereof may have the shape of a cylindrical column or a polygonal column) having an outer diameter somewhat smaller than the diameter of a chassis opening 41H formed through the backlight chassis 41 and protrudes from the tail end of the column portion 12. The protrusion piece 13A is fitted into the chassis opening 41H and thus immobilizes the support pin 11 in the in-plane direction of the bottom surface 41 B of the backlight chassis 41.

When the projection piece 13A is fitted into the chassis opening 41H of the bottom surface 41B of the backlight chassis 41, the tail end of the column portion 12 comes in contact with the bottom surface 41 B. It is therefore favorable that the tail end of the column portion 12 and the bottom surface 41 B of the backlight chassis 41 are in tight contact with each other. For example, in a case where the bottom surface 41B of the backlight chassis 41 is a flat surface, preferably, the tail end of the column portion 12 is also a flat surface.

The hook piece 13B is a member that is formed at a tip end of the protrusion piece 13A and is to be hooked on an edge of the chassis opening 41H of the backlight chassis 41. The hook piece 13B is therefore hooked on the edge of the chassis opening of the bottom surface 41B and thus immobilizes the support pin 11 in a direction (perpendicular direction or the like) in which the support pin 11 is raised with respect to the bottom surface 41B.

The top portion 14 is a member supported by a tip end of the column portion 12 and has the shape of a cone (tapered shape) such as, for example, a circular cone (the tip end of the top portion 14 has the shape of a hemispherical surface). Further, the top portion 14 is made of a white-based resin that reflects light (a resin material used here, however, is not particularly limited, and examples thereof include polycarbonate).

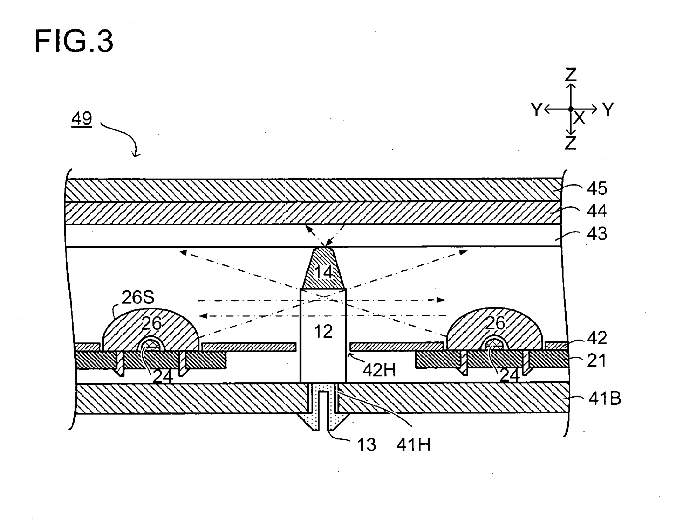

With reference to Fig. 3, the following describes how light travels in a case where the support pin 11 described above supports optical members such as the diffusion plate 43 and so on. Typically, light emitted from the LED 24 passes through the lens 26 to travel in various directions. Hence, there is light that travels toward the support pin 11.

If the support pin 11 is irradiated with such light, a shadow based on the support pin 11 is likely to be cast on the bottom surface 41 B of the backlight chassis 41. As shown in Fig. 3, however, in a case where the column portion 12 of the support pin 11 is made of a material that transmits light therethrough, such as a transparent resin or the like, most part of light traveling toward the support pin 11 is transmitted through the column portion 12. Thus, a shadow of the support pin 11 is unlikely to be cast.

Furthermore, part of light emitted from the LED 24 passes through the lens 26 to reach the diffusion plate 43. The light that has reached the diffusion plate 43 is then spread throughout the inside of the diffusion plate 43 and might travel to the top portion 14 of the support pin 11 that is in tight contact with the diffusion plate 43. The top portion 14, however, is made of a material that reflects light, such as a white resin or the like. The light in the diffusion plate 43 is therefore reflected off the top portion 14 and thus is prevented from travelling through the top portion 14 further into the support pin 11. Light in the diffusion plate 43 is not absorbed through the top portion 14 as described above, and thus a phenomenon is prevented in which the vicinity of the top portion 14 (namely, the vicinity of a tip end of the support pin 11) becomes darker than the surroundings, namely, the surroundings excluding the top portion 14.

As a result of the foregoing, in light (backlight light) that has passed through the optical members 43 to 45 including the diffusion plate 43 and so on, there occurs no light amount unevenness attributable to a shadow cast due to the presence of the support pin 11 and attributable to a dark portion generated based on the top portion 14 of the support pin 11. Thus, providing the backlight unit 49 that utilizes light of the LED 24 with the support pin 11 described above makes it unlikely that there occurs light amount unevenness in light emitted from the backlight unit 49 (that is, it can be said that the support pin 11 is a member that is used usefully in the backlight unit 49).

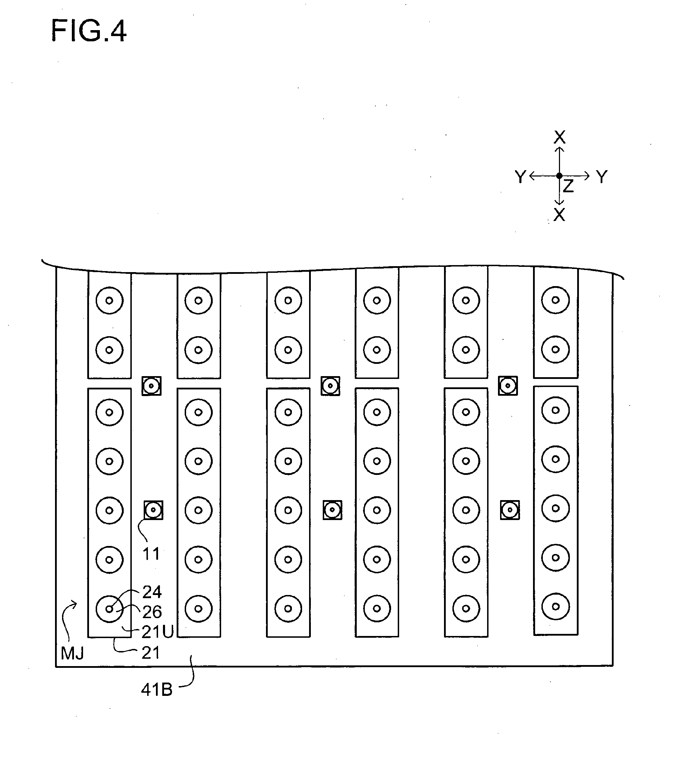

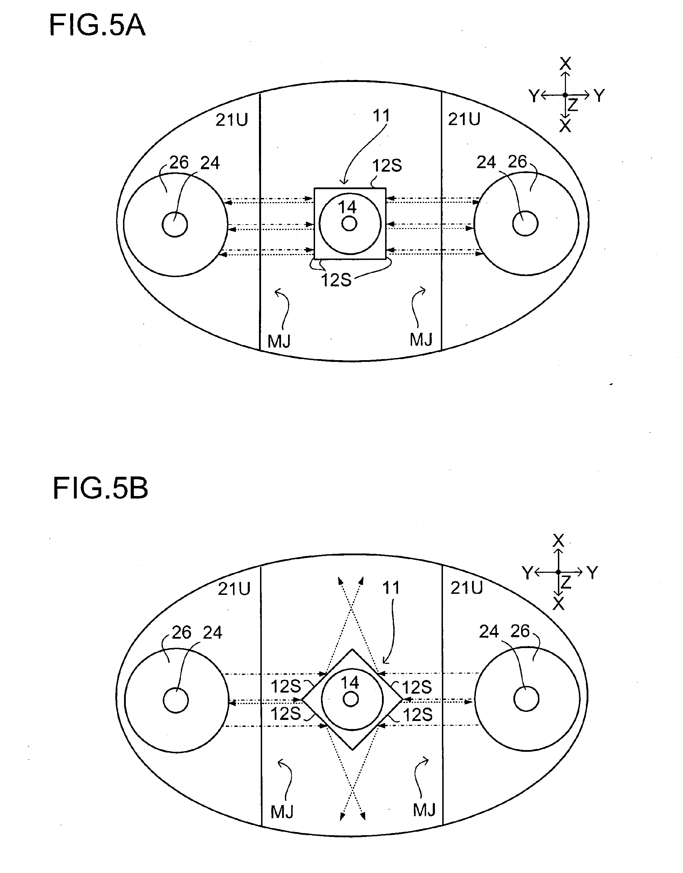

By the way, in a case where, as shown in the plan view of Fig. 4, a plurality of the LEDs 24 are disposed in rows, and the support pin 11 is interposed between adjacent ones of the LEDs 24, the support pin 11 should be oriented in a preferred orientation. To be more specific, it is favorable that, as shown in the enlarged view of Fig. 5A, a side surface (flat surface or the like) 12S of the column portion 12 along a pin axis direction of the support pin 11 is orthogonal to a direction in which the adjacent ones of the LEDs 24 interposing the support pin 11 therebetween are arranged (namely, the Y direction).

The following describes the reason for this based on the comparison between the disposition of the support pin 11 shown in Fig. 5A and the disposition of the support pin 11 as a comparative example shown in Fig. 5B. Fig. 5B shows a state where the side surface 12S of the column portion 12 that is a quadrangular column is disposed to be inclined at an angle of 45° with respect to the direction in which the adjacent ones of the LEDs 24 interposing the support pin 11 therebetween are arranged.

As shown in both the figures, when light (see arrows indicated by alternate long and short dashed lines) travels from the LEDs 24 along the direction in which the adjacent ones of the LEDs 24 interposing the support pin 11 therebetween are arranged, in a case where the column portion 12 of the support pin 11 is disposed as shown in Fig. 5B, while most part of incident light is transmitted through the column portion 12, part of the light is reflected by the side surface 12S to travel in a direction intersecting the Y direction. The light therefore travels in various directions relative to the support pin 11 as a center (base point) (see arrows indicated by dotted lines). In such a case, it becomes likely that the support pin 11 visually stands out from the surroundings excluding the support pin 11, so that there occurs light amount unevenness in backlight light.

On the other hand, in a case where the column portion 12 of the support pin 11 is disposed as shown in Fig. 5A, when light travels along the direction in which the adjacent ones of the LEDs 24 interposing the support pin 11 therebetween are arranged (for example, the Y direction), while, similarly to the case shown in Fig. 5B, most part of incident light is transmitted through the column portion 12, part of the light is reflected by the side surface 12S to travel along the Y direction (the bottom line is that the side surface 12S reflects light traveling from the LED 24 so as to return the light to the LED 24; see arrows indicated by dotted lines). In this case, it is likely that the amount of light traveling in various directions relative to the support pin 11 as the center is reduced. As a result, the support pin 11 is prevented from visually standing out from the surroundings excluding the support pin 11, so that it becomes unlikely that there occurs light amount unevenness in backlight light.

The bottom line is that, in a case where the column portion 12 of the support pin 11 includes the side surface 12S along the pin axis direction, adjusting the position of the side surface 12S that is a flat surface or the like allows light from the LED 24 to be reflected to travel in a desired direction, and thus the support pin 11 can be prevented from visually standing out when seen from the outside.

### [Other Embodiments]

The present invention is not limited to the foregoing embodiment and various modifications can be made thereto without departing from the spirit of the present invention.

For example, in the foregoing embodiment, the column portion 12 is a quadrangular column, but there is no limitation thereto. For example, the column portion 12 may be a triangular column or have the shape of a column having a pentagonal or more polygonal bottom surface. Furthermore, the column portion 12 may have a cone shape (pyramid shape/circular cone shape) or a truncated cone shape (truncated pyramid shape/truncated circular cone shape). The bottom line is that it is only required that the column portion 12 be a column capable of supporting the top portion 14 and made of a material that transmits light therethrough.

Furthermore, the shape of the top portion 14 is also not limited to the shape of a cone such as a circular cone (pyramid shape/circular cone shape) and may be a truncated cone shape (truncated pyramid shape/truncated circular cone shape) or a column shape. The bottom line is that it is only required that an area of the support pin 11 where it comes in contact with the optical members such as the diffusion plate 43 and so on be as small as possible. The reason for this is that, with this area being as small as possible, an area of the optical members where the support pin 11 is reflected also becomes small, so that it becomes unlikely that there occurs light amount unevenness in light emitted via the optical members.

The column portion 12 and the top portion 14 of the support pin 11 may be formed integrally by two-color molding (double molding), or alternatively, the column portion 12 and the top portion 14 as separate bodies may be assembled into one support pin 11. The bottom line is that a method of manufacturing the support pin 11 may be selected depending on various intended purposes such as manufacturing cost reduction, simplification of its manufacturing process, and so on.

Moreover, the top portion 14 may be made of paint. That is, a portion of the support pin 11 that projects beyond the bottom surface 41B of the backlight chassis 41 may be mostly constituted by the column portion 12, with a tip end thereof coated with light reflective paint. Also in this case, light passing in various directions through the diffusion plate 43 is reflected off the paint with which the tip end of the column portion 12 is coated and thus is prevented from entering the column portion 12 and, accordingly, from entering the support pin 11. Light in the diffusion plate 43 is therefore not absorbed in the support pin 11, and thus a phenomenon is prevented in which the vicinity of the tip end of the support pin 11 becomes darker than the surroundings.

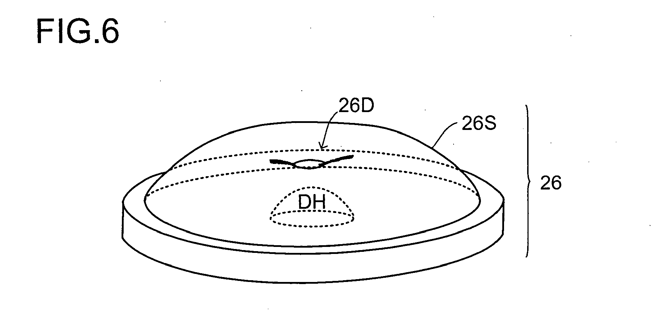

Furthermore, as shown in Fig. 6, the lens 26 may include a cave-in hole 26D that is formed by caving in part of the lens surface 26S lying above the housing recess DH (namely, the LED 24). With this configuration, a curved surface divided with respect to the cave-in hole 26D is generated on the lens surface 26S, and compared with light passing through a lens surface having no cave-in hole, light passing through the lens surface 26S thus configured is not converged at one spot in the form of light having relatively high light intensity.

That is, compared with a curved surface of a lens surface without a cave-in hole, the curved surface of the lens surface 26S surrounding the cave-in hole 26D has a high curvature and thus diffuses light of the LED 24 without converging it in the immediate upper vicinity of the cave-in hole 26D (the lens 24, therefore, can be said to be a diffusion lens). This makes it likely that a relatively large amount of light reaches the support pin 11 (even in a case where the lens surface 26S has no cave-in hole, light can be diffused utilizing a curvature of a curved surface of the housing recess DH). Thus, the foregoing support pin 11 that suppresses the occurrence of light amount unevenness is used effectively.

By the way, the support pin 11 serves the function of supporting the optical members 43 to 45 including the diffusion plate 43. The support pin 11, however, may be formed to be continuous with a functional member having an intended use other than supporting the optical members 43 to 45. For example, in a case where, instead of the LED 24, a fluorescent tube is used as a light source in the backlight unit 49, as shown in Fig. 7, a lamp clip 16 for grasping the fluorescent tube may be mounted to the side surface 12S of the support pin 11.

To be more specific, the lamp clip 16 includes a branch piece 16T and a clip piece 16C formed at a tip end of the branch piece 16T.

The branch piece 16T is an arm-shaped piece member that protrudes from the side surface 12S of the column portion 12 and extends toward the top portion 14. In Fig. 7, the branch piece 16T protrudes from each of the two opposed side surfaces 125. There is, however, no limitation thereto.

The clip piece 16C is a member that is positioned at the tip end of each of the branch pieces 16T and grasps a side surface of a fluorescent tube having a rod shape (cylindrical column shape or the like). In order to grasp a fluorescent tube having a cylindrical column shape or the like, the clip piece 16C is formed in the shape of a cylindrical column tube having a cutout ST formed on its side surface. Aimed at grasping a fluorescent tube, the clip piece 16C has an inner diameter somewhat larger than the outer diameter of the fluorescent tube.

The clip piece 16C includes overhanging portions AP · AP constituting edge portions of the cutout ST. The overhanging portions AP · AP extend to be separated further from each other with increasing distance from a center of the inner diameter of the clip piece 16C. The width of the cutout ST (spacing between the overhanging portions AP · AP) is therefore widened further with increasing distance from the center of the inner diameter of the clip piece 16C.

The overhanging portions AP · AP described above are made of resin and thus have an elastic force. When a fluorescent tube is aligned with the cutout ST and pressed against it, due to the elasticity, the overhanging portions AP · AP are separated from each other. As a result, the fluorescent tube is easily fitted into the clip piece 16C.

Furthermore, after the fluorescent tube has been fitted into the clip piece 16C, due to the elasticity, the overhanging portions AP · AP being in such a state where the width of the cutout ST has been widened restore to their original state (normal state where the fluorescent tube is not held between them). The overhanging portions AP · AP therefore approach each other, and thus the fluorescent tube is held by the clip piece 16C. As a result, the fluorescent tube is stably grasped without being accidentally dislodged and falling off from the clip piece 16C.

In the above-described case where the support pin 11 is formed integrally with the lamp clip 16, a lamp clip used merely to grasp a fluorescent tube is no longer needed, and thus the number of components of the backlight unit 49 is reduced. As a result, the manufacturing of the backlight unit 49 is facilitated.

Furthermore, a functional member having a different intended use are not limited to a member for grasping a light source such as a fluorescent tube or the like and may be a member for coupling a plurality of other members together. For example, as shown in the cross-sectional view of Fig. 8, a rivet RT for fastening the mounting substrate 21 of the LED module MJ to the bottom surface 41B of the backlight chassis 41 may be formed integrally with the support pin 11.

Also in a case of the support pin 11 described above, the number of components of the backlight unit 49 is reduced, and thus the manufacturing of the backlight unit 49 is facilitated. In addition, the lamp clip 16 may be mounted to the support pin 11 described above that serves a function as the rivet RT. That is, the support pin 11 may be configured to support the optical members, grasp a fluorescent tube, and fasten the mounting substrate 21 to the backlight chassis 41.

### List of Reference Symbols

- 11: support pin
- 12: column portion
- 12S: side surface of column portion
- 13: engagement portion
- 14: top portion
- 16: lamp clip
- RT: rivet
- MJ: LED module
- 21: mounting substrate
- 24: LED (light source, point light source, light emitting element)
- 26: lens
- 41: backlight chassis
- 42: large-sized reflection sheet
- 43: diffusion plate
- 44: prism sheet
- 45: microlens sheet
- 49: backlight unit
- 59: liquid crystal display panel (display panel)
- 69: liquid crystal display device (display device)
- 89: television receiving device

## Claims

1. A support pin that supports an optical member that transmits light from a light source therethrough, comprising:
a top portion that comes in contact with the optical member; and
a column portion that supports the top portion,
wherein the top portion is made of a light reflective material, and
the column portion is made of a light transmissive material.

2. The support pin according to claim 1, wherein
the top portion has a tapered shape.

3. The support pin according to claim 2, wherein
the top portion has a cone shape.

4. The support pin according to claim 1 or 2, wherein
the top portion is made of paint.

5. The support pin according to any one of claims 1 to 4, wherein
the column portion has a column shape including a flat surface along a pin axis direction of the support pin.

6. The support pin according to claim 5, wherein
the column portion has a polygonal column shape.

7. The support pin according to any one of claims 1 to 6, wherein
the support pin is formed to be continuous with a functional member having an intended use other than supporting the optical member.

8. The support pin according to claim 7, wherein
the functional member is a member for grasping the light source.

9. The support pin according to claim 7, wherein
the functional member is a member for coupling a plurality of other members together.

10. An illumination device, comprising:
the support pin according to any one of claims 1 to 9;
the optical member that is supported by the support pin; and
a light source that supplies light to the optical member.

11. The illumination device according to claim 10, wherein
in a case where a plurality of the light sources are disposed in rows, and the support pin is interposed between adjacent ones of the light sources,
a side surface of the column portion along the pin axis direction of the support pin is orthogonal to a direction in which the adjacent ones of the light sources interposing the support pin therebetween are arranged.

12. The illumination device according to claim 10 or 11, wherein
the support pin is formed to be continuous with a functional member having an intended use other than supporting the optical member, and
the functional member has an intended use to grasp a linear light source that is the light source.

13. The illumination device according to any one of claims 10 to 12, wherein
the support pin is formed to be continuous with a functional member having an intended use other than supporting the optical member, and
the functional member has an intended use to couple a mounting substrate to which the light source is mounted to a chassis.

14. A display device, comprising:
the illumination device according to any one of claims 1 to 13; and
a display panel that receives light from the illumination device.

15. The display device according to claim 14, wherein
the display panel is a liquid crystal display panel.

16. A television receiving device comprising the display device according to claim 15.
